# EUROPÄISCHE PATENTANMELDUNG

(11) **EP 0 551 563 A1**
(43) Veröffentlichungstag der Anmeldung: **21.07.1993**
(21) Anmeldenummer: 92114352.5
(22) Anmeldetag: 22.08.1992
(51) Int. Cl.: F16J 15/32

(54) **Radialwellendichtring**

(30) Priorität: 16.01.1992 DE 4200927
(71) Anmelder: Firma Carl Freudenberg, D-69469 Weinheim (DE)
(72) Erfinder: Johnston, David Ernest, Dr., W-6940 Weinheim (DE)

(57) **Zusammenfassung**

Radialwellendichtring mit einer Dichtungsachse (6) und einer eine abzudichtende Welle (1) umfangsseitig berührende Dichtlippe (2) aus polymerem Werkstoff, wobei die Dichtlippe (2) gleichmäßig in Umfangsrichtung verteile, radial nach innen vorstehende Rippen (3) aufweist. Die Dichtlippe (2) ist innenseitig durch eine hohlkegelig in Richtung der von dem abzudichtenden Raum (8) abgewandten Seite in ihrem Durchmesser erweiterte Innenfläche (2.1) begrenzt. Die Innenfläche (2.1) schließt auf der von dem abgedichteten Raum (8) abgewandten Seite der Dichtlippe (2) mit der Dichtungsachse (6) einen ersten Winkel (9) ein, der 0,02 bis 0,5 mal so groß ist, wie ein zweiter Winkel (10), den die Innenfläche (2.1) auf der dem abgedichteten Raum (8) zugewandten Seite der Dichtlippe (2) mit der Dichtungsachse (6) einschließt. Die Rippen (3) sind durch eine sich nur in Umfangsrichtung entlang einer Umfangskreislinie fortsetzende Wellung der Innenfläche (2.1) gebildet.

## Beschreibung

Die Erfindung betrifft einen Radialwellendichtring mit einer Dichtungsachse und einer eine abzudichtende Welle umfangsseitig berührende Dichtlippe aus polymerem Werkstoff, wobei die Dichtlippe gleichmäßig in Umfangsrichtung verteilte, radial nach innen vorstehende Rippen aufweist.

Ein solcher Radialwellendichtring ist aus der DE-PS 28 35 359 bekannt. Der vorbekannte Radialwellendichtring für hydrodynamische Wellendichtungen weist die radial nach innen vorstehenden Rippen nur im entspannten Zustand auf. Während der bestimmungsgemäßen Verwendung, wenn das ringförmige Abdichtelement eine abzudichtende Welle umfangsseitig vollständig dichtend berührt, geht die ringscheibenförmige Gestalt mit den radial nach innen vorstehenden Rippen verloren und das Abdichtungselement bildet eine zur Wellenachse konisch nach innen geneigte Dichtlippe, die, in Umfangsrichtung gesehen, gegenüber einer Umfangskreislinie in axialer Richtung sinusförmig verlagert ist. Die Wellung in axialer Richtung bedingt eine Rückförderwirkung des abzudichtenden Mediums in Richtung des abzudichtenden Raumes durch axiale Umlenkung der Flüssigkeitsbestandteile zwischen der Wellenoberfläche und der Dichtlippe des Abdichtelementes. Dabei ist allerdings zu beachten, daß sich während der bestimmungsgemäßen Verwendung des ringförmigen Abdichtelementes die Lage der Dichtlippe bezogen auf die Wellenoberfläche während der Gebrauchsdauer durch Relaxationserscheinungen verändern kann und dadurch gegebenenfalls zu Beeinträchtigungen der Abdichtung führt. Da der Rückfördereffekt auf einer axialen Umlenkung der Flüssigkeitsbestandteile auf der Welle beruht, ist aber eine während der Gebrauchsdauer stets gleichbleibende geometrische Form und eine gleichbleibende Zuordnung der beiden Teile zueinander erforderlich. Die Gebrauchseigenschaften sind während einer langen Gebrauchsdauer, insbesondere bei stillstehender Welle, also statischer Abdichtung, wenig befriedigend.

Der Erfindung liegt die Aufgabe zugrunde, einen Radialwellendichtring der eingangs genannten Art derart weiterzuentwickeln, daß sich ausgezeichnete Gebrauchseigenschaften während einer langen Gebrauchsdauer bei verbesserten Abdichtungsergebnissen einstellen und eine Leckage der im abzudichtenden Raum befindlichen Flüssigkeit sowohl bei stillstehender, als auch bei rotierender Welle zuverlässig vermieden wird.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei dem erfindungsgemäßen Radialwellendichtring ist es vorgesehen, daß die Dichtlippe innenseitig durch eine hohlkegelige in Richtung der von dem abzudichtenden Raum abgewandten Seite in ihrem Durchmesser erweiterten Innenfläche begrenzt ist, daß die Innenfläche auf der von dem abgedichteten Raum abgewandten Seite der Dichtlippe mit der Dichtungsachse einen ersten Winkel einschließt, der 0,02 bis 0,5 mal so groß ist wie ein zweiter Winkel, den die Innenfläche auf der dem abgedichteten Raum zugewandten Seite der Dichtlippe mit der Dichtungsachse einschließt und daß die Rippen durch eine sich nur in Umfangsrichtung entlang einer Umfangskreislinie fortsetzende Wellung der Innenfläche gebildet sind. Diese Ausgestaltung bedingt, daß die nur in Umfangsrichtung entlang einer Umfangskreislinie ausgebildete Wellung mit ihren radial nach innen weisenden Rippen die abzudichtende Welle mit unterschiedlicher Vorspannung dichtend anliegend berühren. Die Rippen, die von der Dichtungsachse den kleinsten Abstand aufweisen, liegen mit einer relativ vergrößerten Vorspannung gegenüber den Rippen an der Welle an, die von der Dichtungsachse einen größeren Abstand aufweisen. Im Rahmen der vorliegenden Erfindung ist es vorgesehen, daß die Dichtlippe, die sich entlang einer Umfangskreislinie erstreckt, in allen Teilbereichen die abzudichtende Welle dichtend berührt. Eine Ausgestaltung, nach der die Dichtlippe nur zum überwiegenden Teil die Welle berührt und in den anderen Teilbereichen mit der Welle einen Spalt von kapillaraktiver Enge begrenzt, ist ebenfalls denkbar.

Die Pumpwirkung des abzudichtenden Mediums in Richtung des abzudichtenden Raumes beruht bei dem erfindungsgemäßen Radialwellendichtring im Gegensatz zum Stand der Technik nicht auf einer Umlenkung der Flüssigkeitsbestandteile in axialer Richtung auf der Wellenoberfläche, bedingt beispielsweise durch in axialer Richtung sinusförmig verlaufenden Vorsprünge, sondern auf einer schwellenden Kraft, die während der dynamischen Abdichtung in radialer Richtung auf die abzudichtende Flüssigkeit wirkt. Durch die Ausgestaltung der Innenfläche des Radialwellendichtringes werden die Flüssigkeitsbestandteile, die den hydrodynamischen Schmierfilm bilden, in Richtung des abzudichtenden Raumes gedrückt wird.

Durch die erfindungsgemäße Ausgestaltung des Radialwellendichtringes ergibt sich eine ausgezeichnete Schmierung zwischen der Dichtlippe und der angrenzenden Welle, was einen außergewöhnlich geringen Verschleiß der Dichtlippe und eine sehr hohe Gebrauchsdauer bei gleichbleibend guten Abdichtungsergebnissen, unabhängig von der Drehrichtung der Welle, bedingt. Vorteilhaft darüberhinaus ist, daß durch den erfindungsgemäßen Radialwellendichtring nicht nur flüssigkeitsgefüllte Räume gegen die Umgebung abgedichtet werden können, sonder daß durch die Pumpwirkung des Radialwellendichtringes auch Flüssigkeit, die sich außerhalb des abzudichtenden Raumes befindet, an der Dichtlippe vorbei in den abgedichteten Raum gefördert werden kann und dann, wenn der Fördervorgang abgeschlossen ist, in diesem gehalten wird. Durch die sich nur in Umfangsrichtung und nur entlang einer Umfangskreislinie fortsetzende Wellung der Innenfläche wird das abzudichtende Medium, das den hydrodynamischen Schmierfilm zwischen Dichtlippe und Welle bildet, einerseits durch die Wellenrotation in gleicher Drehrichtung geschleppt und andererseits immer wieder in Richtung des abzudichtenden Raumes zurückgefördert.

Zur Funktion des Radialwellendichtringes ist folgendes auszuführen:
Die Dichtlippe ist innenseitig durch eine Dichtfläche begrenzt, die hohlkegelförmig gestaltet ist und auf der dem abzudichtenden Raum abgewandten Seite in ihrem Durchmesser derart erweitert ist, daß die Merkmale aus dem kennzeichnenden Teil von Anspruch 1 erfüllt sind. Bei statischer Abdichtung, wenn eine Relativbewegung zwischen der abzudichtenden Welle und dem Radialwellendichtring nicht stattfindet, berührt die Dichtlippe die Welle in allen Umfangsteilbereichen dichtend anliegend. Die Dichtlippe berührt die Welle nur entlang einer Umfangskreislinie und weist keine Wellungen in axialer Richtung auf. Durch die nur in radialer Richtung gewellten Rippen der Innenfläche ergibt sich in Bereichen der größten Abständen von der Dichtungsachse eine relativ kleinere Kraft auf die Wellenoberfläche als in Bereichen mit kleineren Abständen. Durch die in sich geschlossene Berührungslinie von Dichtlippe und Welle bei statischer Abdichtung kann eine Leckage in diesem Betriebszustand zuverlässig vermieden werden. Für eine dynamische Abdichtung ist die Ausgestaltung des Radialwellendichtringes, insbesondere die Geometrie der Innenfläche von ausschlaggebender Bedeutung. Neben der Wellung der Innenfläche in radialer Richtung bewirken die unterschiedlich großen Winkel der Innenfläche auf der dem abzudichtenden Raum zugewandten und auf der von dem abzudichtenden Raum abgewandten Seite der Dichtlippe bezogen auf die Dichtungsachse insgesamt eine Förderwirkung des abzudichtenden Mediums in Richtung des abzudichtenden Raumes.

Durch die nur in radialer Richtung gewellten Rippen in Verbindung mit der beschriebenen Geometrie der Dichtlippe wirkt bei Rotation beispielsweise der Welle eine schwellende Radialkraft in Richtung der Wellenoberfläche und eine Verdrängung der Flüssigkeitsbestandteile, die sich im Wirkungsbereich der Innenfläche befinden, in beide axiale Richtungen. Bei Nachlassen der Radialkraft ergibt sich demgegenüber eine Bewegung von Flüssigkeitsbestandteilen in Richtung der Dichtlippe. Die unterschiedlichen Winkel der Innenfläche, die die Dichtlippe bildet, bewirken insgesamt eine Förderwirkung des abzudichtenden Mediums in Richtung des abzudichtenden Raumes. Durch die Vermeidung von Axialvorsprüngen oder anderen Umlenkvorrichtungen zum Umlenken der Flüssigkeit in Richtung des abzudichtenden Raumes ist die Funktion des erfindungsgemäßen Radialwellendichtringes unabhängig von der Drehrichtung der Welle und/oder des Radialwellendichtringes gegeben.

Auch die Art des Radialwellendichtring-Werkstoffes sowie dessen Werkstoffkennwerte beeinflussen die Funktion der Dichtungsanordnung. Gemäß einer vorteilhaften Ausgestaltung ist es vorgesehen, daß die Differenz aus in Umfangsrichtung benachbarten größten und kleinsten Abständen der Dichtlippe von der Dichtungsachse kleiner ist, als 0,3 mm. Bei einer Überschreitung einer Abstandsdifferenz von 0,3 mm ist in den meisten Fällen eine Schleppwirkung der abzudichtenden Flüssigkeit durch die Relativrotation von Welle und Radialwellendichtring zueinander nicht mehr sicher gewährleistet.

Die Innenfläche kann durch in Umfangsrichtung aufeinander folgende Kegelflächen von gedachten Kegeln gebildet sein, die abwechselnd eine radial innerhalb und eine radial außerhalb der Dichtlippe liegende Kegelachse haben. Die gleichmäßige Wölbung der Kegelflächen bewirkt eine gleichmäßige Förderwirkung des abzudichtenden Mediums zurück in den abzudichtenden Raum. Darüber hinaus ist von Vorteil, daß die gleichmäßig ausgebildeten Kegelflächen einfach und wirtschaftlich herstellbar sind.

Die Innenflächen können in Umfangsrichtung eine sinusförmige Wellung aufweisen, die sich nur in radialer Richtung erstreckt. Durch die unterschiedlichen Steigungen entlang der Sinuskurve, die sich entlang einer Umfangskreislinie erstreckt, treten in verschiedenen Bereichen der Dichtlippe verschieden starke Förderwirkungen auf. Durch die Gestalt der sinusförmigen Innenfläche kann der Radialwellendichtring besonders gut an unterschiedliche Viskositäten der abzudichtenden Medien angepaßt werden.

Die Differenz aus den in Umfangsrichtung benachbarten größten und kleinsten Abständen der Dichtlippe von der Dichtungsachse kann kleiner sein als 0,15 mm und ist bevorzugt kleiner als 0,1 mm. Je kleiner die Differenz der Abstände der gewellten Innenfläche von der Dichtungsachse ist, desto sicherer werden Flüssigkeitsbestandteile auch bei kleinen Umfangsgeschwindigkeiten, beispielsweise der Welle, mitgeschleppt.

Auch die Dichtungswirkung nimmt mit kleiner werdenden Differenzen der Abstände zu, so daß Differenzen, die kleiner sind als 0,1 mm, bevorzugt zur Abdichtung dünnflüssiger Medien Anwendung finden. Größe Differenzen im Bereich zwischen 0,1 mm und 0,3 mm sind wirtschaftlicher herstellbar und zum Abdichten relativ zäherer Medien geeignet.

Gute Gebrauchseigenschaften während einer langen Gebrauchsdauer in Verbindung mit einer wirtschaftlichen Herstellbarkeit können durch eine Innenfläche des Radialwellendichtringes erzielt werden, deren benachbarte Scheitelpunkte eine Umfangserstreckung von wenigstens 1,5 mm aufweisen. Die Größe der Umfangserstreckung ist im wesentlichen abhängig vom Durchmesser der abzudichtenden Welle, von deren Rotationsgeschwindigkeit und der Viskosität des abzudichtenden Mediums.

Radialwellendichtringe zur Abdichtung von Wellen mit größeren Durchmessern können eine Innenfläche aufweisen, die zwischen einander benachbarten Scheitelpunkten der Wellung eine Umfangserstreckung von wenigstens 5 mm aufweist. Unabhängig von der Umfangserstreckung zwischen den benachbarten Scheitelpunkten sind zumindest zwei vollständige Wellungen entlang der Innenfläche anzuordnen. Mit zunehmender Länge der Umfangserstreckung bei annähernd gleicher Wellenamplitude werden die Winkel, die von der Innenfläche der Wellung und der angrenzenden Wellenoberfläche gebildet werden und sich alle auf einer Umfangskreislinie befinden, kleiner, wodurch sich eine bessere Abdichtung und ein höherer Förderdruck des abzudichtenden Mediums zurück in den abzudichtenden Raum bei dynamischer Abdichtung ergibt.

Die Innenfläche auf der von dem abzudichtenden Raum abgewandten Seite der Dichtlippe kann eine axiale Länge von wenigstens 1 mm aufweisen. Hierbei ist von Vorteil, daß sowohl eine gute statische als auch eine gute dynamische Abdichtung gewährleistet ist, wobei insbesondere bei dynamischer Abdichtung die axiale Länge in Verbindung mit der geringen, radialen Spaltweite zwischen der Innenfläche und der abzudichtenden Welle einen Dichtspalt von kapillaraktiver Enge bilden. Die Flüssigkeitsbestandteile, die den hydrodynamischen Schmierfilm bilden, werden dadurch sicher im Bereich der Innenfläche des Radialwellendichtringes gehalten.

Die Innenfläche kann in axialer Richtung beiderseits durch sich senkrecht zu der Dichtungsachse erstreckende Stirnflächen begrenzt sein. Gemäß dieser vorteilhaften Ausgestaltung ist eine genauer definierte Belastung der Innenfläche in radialer Richtung auf die Welle zu erzielen. Außerdem ist die Herstellbarkeit einer Innenfläche, die in axialer Richtung beiderseits durch sich senkrecht zu der Dichtungsachse erstreckende Stirnflächen begrenzt ist, gegenüber anderen Ausgestaltungen vereinfacht.

Die Innenfläche kann auf der von dem abgedichteten Raum abgewandten Seite der Dichtlippe mit der Dichtungsachse einen Winkel einschließen, der zwischen 2° und 20° liegt. Dieser Bereich ist für eine Vielzahl von Anwendungen gut geeignet.

Eine besonders vorteilhafte Wirkung in bezug auf die Funktion des Radialwellendichtringes hinsichtlich der Stärke der Rückförderwirkung und der Abdichtung, sowie dessen Gebrauchsdauer ergibt sich, wenn die Innenfläche auf der von dem abgedichteten Raum abgewandten Seite der Dichtlippe mit der Dichtungsachse einen Winkel einschließt, der 3,123 bis 3,875° beträgt.

Der Gegenstand der Erfindung wird nachfolgend anhand der als Anlage beigefügten Zeichnungen weiter verdeutlicht. Es zeigen:
- Figur 1: eine Dichtlippe des erfindungsgemäßen Radialwellendichtringes in einem stark vergrößerten Ausschnitt, der eine Welle umgibt. Der Radialwellendichtring ist im Schnitt A-A gemäß Figur 3 schematisch dargestellt;
- Figur 2: eine Dichtlippe des erfindungsgemäßen Radialwellendichtringes entlang des Schnittes B-B entsprechend Figur 3;
- Figur 3: eine Radialwellendichtring in schematischer Darstellung in einer Ansicht;
- Figuren 4 und 5: eine stark vergrößerte Dichtlippe eines Radialwellendichtringes, dessen Innenfläche in axialer Richtung beiderseits durch sich senkrecht zu der Dichtungsachse erstreckende Stirnflächen begrenzt ist. Figur 4 zeigt die Dichtlippe gemäß Schnitt A-A aus Figur 3, während Figur 5 die Dichtlippe entlang des Schnittes B-B zeigt.

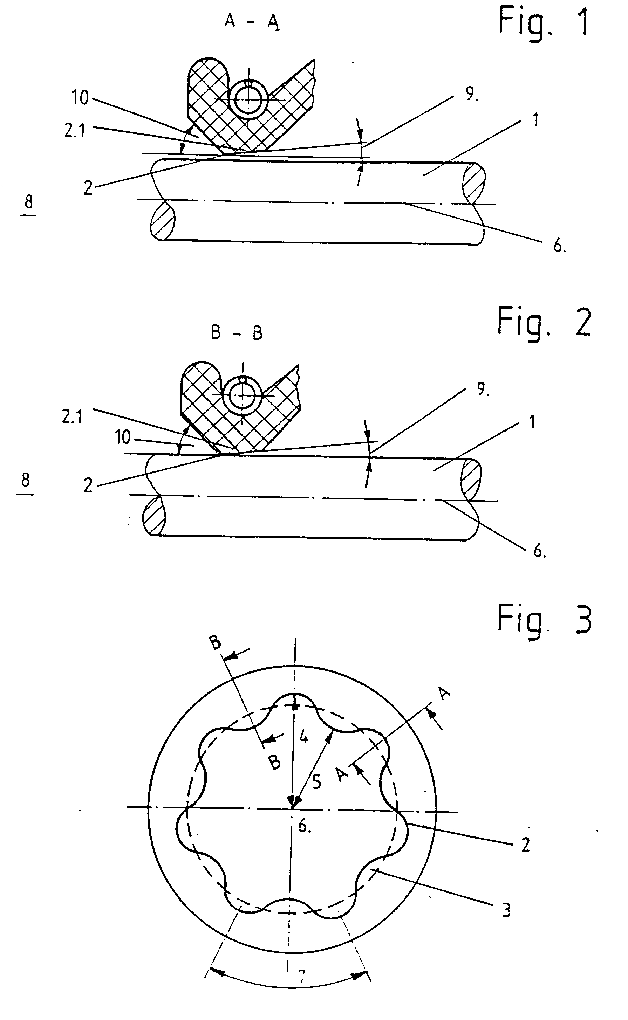

In Figur 1 ist der erfindungswesentliche Teil des Radialwellendichtringes mit der Dichtungsachse 6 dargestellt, der eine abzudichtende Welle 1 mit einer Dichtlippe 2 aus polymerem Werkstoff umfangsseitig anliegend und dichtend berührt. Zur besseren Verständlichkeit des Wirkungsprinzips des erfindungsgemäßen Radialwellendichtringes ist dieser in Figur 1 mit einem geringen Radialspalt zur Welle 1 dargestellt. Die Dichtlippe 2 ist durch eine Innenfläche 2.1 gebildet, die auf der von dem abgedichteten Raum 8 abgewandten Seite der Dichtlippe 2 mit der Dichtungsachse 6 einen ersten Winkel 9 einschließt, der ungefähr 0,15 mal so groß ist wie der zweite Winkel 10, den die Innenfläche 2.1 auf der dem abgedichteten Raum 8 zugewandten Seite der Dichtlippe 2 mit der Dichtungsachse 6 einschließt. Der erste Winkel 9 beträgt in diesem Ausführungsbeispiel ungefähr 6,5°, der zweite Winkel 10 ca. 45°. Der im Vergleich zum zweiten Winkel 10 wesentlich spitzere erste Winkel 9, bewirkt eine Förderwirkung des durch die rotierende Welle mitgeschleppten Mediums in Richtung des abzudichtenden Raumes 8. Die Innenfläche 2.1 ist nur in Umfangsrichtung entlang einer Umfangskreislinie sinusförmig gewellt, wodurch bei rotierender Welle auf den Flüssigkeitsfilm zwischen Welle 1 und Radialwellendichtung eine pulsierende Kraft in radialer Richtung ausgeübt wird. Diese Radialkraft bewirkt durch die radiale Wellung und die V-förmig ausgebildete Innenfläche 2.1 abwechselnd eine Verdrängung der Flüssigkeitsbestandteile in beide axiale Richtungen und anschließend, bei sich verringernder Kraft eine Bewegung der Flüssigkeitsbestandteile in Richtung der Dichtlippe 2. Durch die geometrische Form der Innenfläche 2.1 ergibt sich insgesamt eine Förderwirkung in Richtung des abgedichteten Raumes 8.

In Figur 2 ist der erfindungsgemäße Radialwellendichtring dargestellt, der unter einer im Vergleich zu Figur 1 vergrößerten radialen Vorspannung die Oberfläche der Welle 1 berührt. In dieser Figur ist der kleinste Abstand 5 der Innenfläche 2.1 von der Dichtungsachse 6 gezeigt (vergleiche Figur 3). Trotz der im Vergleich zu Figur 1 relativ größeren Vorspannung, mit der die Dichtlippe 2 die Oberfläche der Welle 1 berührt, bleibt die geometrische Form der Innenfläche 2.1 weitestgehend erhalten. Eine axiale Verlagerung der Dichtlippe 2 auf der Oberfläche der Welle 1 erfolgt nicht, so daß die Dichtlippe sowohl bei statischer als auch bei dynamischer Abdichtung die Welle 1 entlang einer Umfangskreislinie berührt. Die vorteilhaften Gebrauchseigenschaften der erfindungsgemäßen Radialwellendichtung sind unabhängig von der Drehrichtung der Welle 1.

In Figur 3 ist der Radialwellendichtring gemäß der Figuren 1 und 2 in einer Ansicht gezeigt. Zur Verdeutlichung der Wirkungsweise sind die größten 4 und kleinsten Abstände 5 der Innenflächen 2.1 von der Dichtungsachse 6 stark vergrößert dargestellt. Die Innenfläche 2.1 ist in Umfangsrichtung sinusförmig gewellt, wobei die Wellung entlang einer kreisförmigen Umfangslinie nur in radialer Richtung ausgebildet ist. Die Umfangserstreckung zwischen den einander benachbarten Scheitelpunkten der Wellung ist mit der Bezugsziffer 7 versehen. Unabhängig von der Größe des Radialwellendichtringes sind zuminderst zwei vollständige Wellungen mit einer jeweiligen Umfangserstreckung 7 entlang des Innenumfanges des Radialwellendichtringes erforderlich.

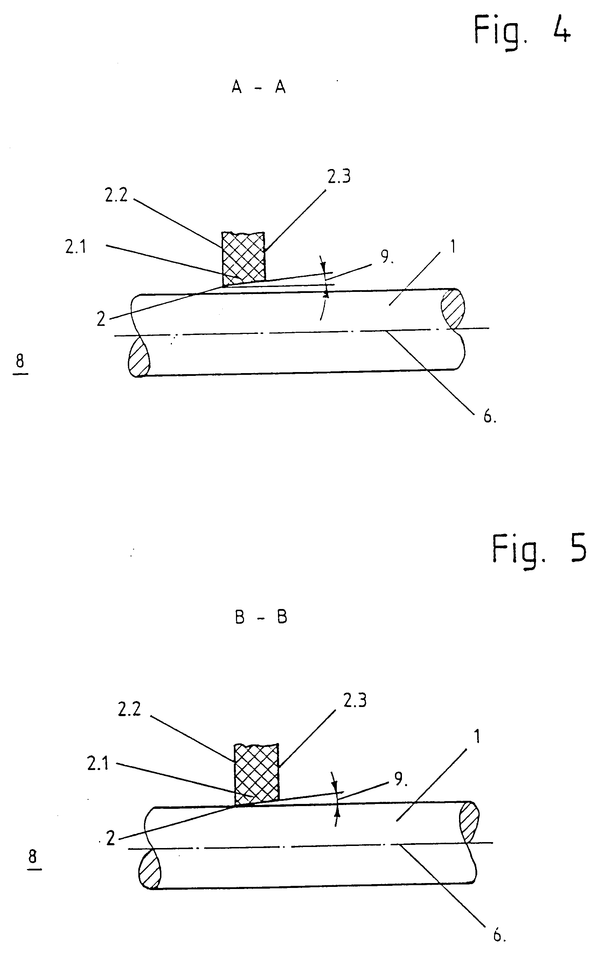

In den Figuren 4 und 5 ist die winklig zur Dichtungsachse 6 geneigte Innenfläche 2.1 jeweils in axialer Richtung beiderseits durch sich senkrecht zu der Dichtungsachse 6 erstreckende Stirnflächen 2.2, 2.3 begrenzt.

In Figur 5 ist der Radialwellendichtring aus Figur 4 gezeigt, wobei die Innenfläche den kleinst möglichen Abstand 5 gemäß Figur 3 Schnitt B-B von der Dichtungsachse 6 aufweist. Die Innenfläche 2.1 weist auch bei der Ausgestaltung nach den Figuren 4 und 5 eine axiale Länge von wenigstens 1 mm auf. Das Funktionsprinzip der beispielhaft dargestellten Radialwellendichtringe gemäß der Figuren 1, 2 und der Figuren 4, 5 ist im wesentlichen gleich.

## Patentansprüche

1. Radialwellendichtring mit einer Dichtungsachse und einer eine abzudichtende Welle umfangsseitig berührende Dichtlippe aus polymerem Werkstoff, wobei die Dichtlippe gleichmäßig in Umfangsrichtung verteilte, radial nach innen vorstehende Rippen aufweist, dadurch gekennzeichnet, daß die Dichtlippe (2) innenseitig durch eine hohlkegelige in Richtung der von dem abzudichtenden Raum (8) abgewandten Seite in ihrem Durchmesser erweiterte Innenfläche (2.1) begrenzt ist, daß die Innenfläche (2.1) auf der von dem abzudichtenden Raum (8) abgewandten Seite der Dichtlippe (2) mit der Dichtungsachse (6) einen ersten Winkel (9) einschließt, der 0,02 bis 0,5 mal so groß ist wie ein zweiter Winkel (10), den die Innenfläche (2.1) auf der dem abgedichteten Raum (8) zugewandten Seite der Dichtlippe (2) mit der Dichtungsachse (6) einschließt und daß die Rippen (3) durch eine sich nur in Umfangsrichtung entlang einer Umfangskreislinie fortsetzende Wellung der Innenfläche (2.1) gebildet sind.

2. Radialwellendichtring nach Anspruch 1, dadurch gekennzeichnet, daß die Differenz aus in Umfangsrichtung benachbarten größten (4) und kleinsten Abständen (5) der Dichtlippe (2) von der Dichtungsachse (6) im herstellungsbedingten Zustand kleiner ist als 0,3 mm.

3. Radialwellendichtring nach Anspruch 1 bis 2, dadurch gekennzeichnet, daß die Innenfläche (2.1) durch in Umfangsrichtung aufeinander folgende Kegelflächen von gedachten Kegeln gebildet ist, die abwechselnd eine radial innerhalb und eine radial außerhalb der Dichtlippe (2) liegende Kegelachse haben.

4. Radialwellendichtring nach Anspruch 1 bis 2, dadurch gekennzeichnet, daß die Innenfläche (2.1) in Umfangsrichtung eine sinusförmige Wellung aufweist, die sich nur in radialer Richtung erstreckt.

5. Radialwellendichtring nach Anspruch 1 bis 4, dadurch gekennzeichnet, daß die Differenz aus in Umfangsrichtung benachbarten größten (4) und kleinsten Abständen (5) der Dichtlippe (2) von der Dichtungsachse (6) kleiner ist als 0,15 mm.

6. Radialwellendichtring nach Anspruch 1 bis 5, dadurch gekennzeichnet, daß die Differenz aus den in Umfangsrichtung benachbarten größten (4) und kleinsten Abständen (5) der Dichtlippe (2) von der Dichtungsachse (6) kleiner ist als 0,1 mm.

7. Radialwellendichtring nach Anspruch 1 bis 6, dadurch gekennzeichnet, daß die Innenfläche (2.1) zwischen einander benachbarten Scheitelpunkten der Wellung eine Umfangserstreckung (7) von wenigstens 1,5 mm aufweist.

8. Radialwellendichtring nach Anspruch 1 bis 6, dadurch gekennzeichnet, daß die Innenfläche (2.1) zwischen einander benachbarten Scheitelpunkten der Wellung eine Umfangserstreckung (7) von wenigstens 5 mm aufweist.

9. Radialwellendichtring nach Anspruch 1 bis 8, dadurch gekennzeichnet, daß die Innenfläche (2.1) auf der von dem abgedichteten Raum (8) abgewandten Seite der Dichtlippe (2) eine axiale Länge von wenigstens 1 mm aufweist.

10. Radialwellendichtring nach Anspruch 1 bis 9, dadurch gekennzeichnet, daß die Innenfläche (2.1) in axialer Richtung durch sich senkrecht zu der Dichtungsachse (6) erstreckende Stirnflächen (2.2, 2.3) begrenzt ist.

11. Radialwellendichtring nach Anspruch 1 bis 10, dadurch gekennzeichnet, daß die Innenfläche (2.1) auf der von dem abgedichteten Raum (8) abgewandten Seite der Dichtlippe (2) mit der Dichtungsachse (6) einen ersten Winkel (9) einschließt, der zwischen 2° und 20° liegt.

12. Radialwellendichtring nach Anspruch 11, dadurch gekennzeichnet, daß der erste Winkel (9) 3,123 bis 3,875° beträgt.
